Europäisches Patentamt

European Patent Office

Office européen des brevets

(19)

(11) **EP 1 187 394 A2**

(12) **EUROPÄISCHE PATENTANMELDUNG**

(43) Veröffentlichungstag:
**13.03.2002 Patentblatt 2002/11**

(51) Int Cl.$^7$: **H04L 12/24**

(21) Anmeldenummer: **01121458.2**

(22) Anmeldetag: **07.09.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **11.09.2000 DE 10044828**

(71) Anmelder: **Tenovis GmbH & Co. KG**
**60362 Frankfurt am Main (DE)**

(72) Erfinder: **Weirauch, Andreas**
**80686 München (DE)**

(74) Vertreter: **Bohnenberger, Johannes, Dr. et al**
**Meissner, Bolte & Partner**
**Postfach 86 06 24**
**81633 München (DE)**

(54) **Verfahren zur Steuerung der Auslastung eines lokalen Netzes**

(57) Verfahren zur Steuerung der Auslastung eines lokalen Netzes, das eine Mehrzahl von Stationen miteinander verbindet und als gemeinsames Übertragungsmedium mit einer endlichen Menge von Ressourcen zur Übertragung von Meldungen zwischen den Stationen dient, die folgenden Schritte umfassend: Bestimmen (1) der Werte der für die Übertragung einer Meldung zu reservierenden Ressourcenmenge (r) und der dafür erforderlichen Reservierungszeitspanne (t) durch eine Sendestation ($S_1$, $S_2$, ... $S_n$), Vergleichen (2) der bestimmten Werte der Ressourcenmenge (r) und der Reservierungszeitspanne (t) mit aktuellen Werten ($r_\Sigma$) und maximalen Werten ($r_{max}$) der zur Verfügung stehenden Ressourcenmenge und Reservierungszeitspanne im Übertragungsmedium durch die Sendestation, Hinzufügen (5) der bestimmten Werte der Ressourcenmenge (r) und der Reservierungszeitspanne (r) zu der Meldung und Senden (6) der Meldung an mindestens eine Empfängerstation ($S_1$, $S_2$ ... $S_n$), sobald die Summe aus den aktuellen ($r_\Sigma$) und bestimmten Werten (r) die maximalen Werte ($r_{max}$) nicht übersteigt.

Fig. 2

**Beschreibung**

Die Erfindung betrifft ein Verfahren zur Steuerung der Auslastung eines lokalen Netzes nach dem Oberbegriff des Patentanspruchs 1 sowie eine Vorrichtung zur Durchführung des Verfahrens.

Lokale Netze werden als Telekommunikationsverbindung zur Datenkommunikation zwischen mehreren Stationen, wie beispielsweise Telefonverarbeitungseinrichtungen, PCs, Telefongeräten etc., verwendet. Derartige Lokal Area Networks (LAN) erlauben es, daß neben dem Zugriff auf zentral angeordnete Rechen- und Speicherkapazitäten auch die Kommunikation unter den Stationen zugelassen wird. Hierbei wird der Zugriff auf das lokale Netz von den einzelnen Stationen selbst gesteuert. Eine Empfangsstation erkennt also beispielsweise selbständig die Adresse eines Datenpakets, mit welcher ein solches Datenpaket von der Sendestation ausgestattet wird, und nimmt dieses entgegen, sofern die zugewiesene Adresse die Empfangsstation betrifft. Hierbei wird das lokale Netz als gemeinsames Übertragungsmedium zwischen den Stationen verwendet.

Da ein gemeinsamer Übertragungskanal in einem solchen lokalen Netz keine Zeitschlitze aufweist, steht er mit seiner gesamten Übertragungskapazität der Kommunikation zur Verfügung. Hierbei ergibt sich das Problem der Kollision bei gleichzeitigem Zugreifen von zwei Stationen auf den Kanal des lokalen Netzes. Um eine derartige Kollision zu vermeiden, wird ein sogenanntes Jam-Signal von einer sendenden Station aus gesendet, welches gewissermaßen eine Notbremse darstellt, da jede sendende Station, die ein derartiges Signal erhält, sofort ihre Sendung einstellt und eine Wartephase (Back-Off) beginnt. Es ist leicht vorstellbar, daß die Zahl der Kollisionen im Netz und damit verbunden verlorene Übertragungskapazitäten sprunghaft steigen werden, wenn sehr viele Stationen mit hohen Übertragungsvolumina innerhalb eines Netzsegments betrieben werden. Dies bezieht sich auf lokale Netz vom Typ Ethernet.

Andererseits ist in lokalen Netzen vom Typ Ethernet bei gleichzeitiger Benutzung eines Ethernet-Bussystems durch mehrere von verschiedenen Stationen ausgesendete Datenpakete zu beachten, daß aufgrund der begrenzten Ressourcen des gemeinsamen Übertragungsmediums eine Überlastung des gesamten Netzes auftreten kann. Eine bekannte Maßnahme gegen das Auftreten einer Überlastung ist der Einbau eines sogenannten Ethernet-Switches. Hierbei handelt es sich um ein zentral angeordnetes Element innerhalb des Ethernets, dessen Anordnung dazu führt, daß der Ethernet-Bus zu einem sternförmigen Aufbau degeneriert wird.

In einem solchen sternförmigen Aufbau wird auf jedem Ast ein Ethernet-Protokoll mit garantierter Bandbreite bereitgestellt. Diese Maßnahme ist im Grunde konträr zur Grundidee des Ethernet, eine dezentrale Überwachung des Netzes durchzuführen. Hieraus ergibt sich der Nachteil, daß nur begrenzte Bandbreiten für jeden Ast zur Verfügung stehen und eine zentrale Verwaltung der von dem lokalen Netz vorgegebenen Ressourcen stattfindet. Dies erfordert nicht nur längere Zeiträume und Wege zur Koordination der zu übertragenden Datenpakete bzw. Meldungen, sondern auch zusätzliche zentrale Einrichtungen, wie den erwähnten Ethernet-Switch, die erhöhte Kosten zur Folge haben.

Der Erfindung liegt die Aufgabe zugrunde, ein neuartiges Verfahren zur Auslastungssteuerung anzugeben, welches die Verwaltung der Ressourcen eines lokalen Netzes und damit den Schutz gegen Überlastung des lokalen Netzes dezentral in einfacher, schneller und kostengünstiger Weise erlaubt, sowie eine Vorrichtung zur Durchführung des Verfahrens aufzuzeigen.

Diese Aufgabe wird durch ein Verfahren nach Patentanspruch 1 bzw. durch eine Vorrichtung nach Patentanspruch 10 gelöst.

Insbesondere wird die Aufgabe durch ein Verfahren zur Steuerung der Auslastung eines lokalen Netzes gelöst, bei welchem das lokale Netz eine Mehrzahl von Stationen miteinander verbindet und als gemeinsames Übertragungsmedium mit einer endlichen Menge von Ressourcen zur Übertragung von Meldungen zwischen den Stationen dient. Eine Sendestation, die eine Meldung an Empfängerstationen senden möchte, bestimmt zunächst den Umfang der für die Übertragung der Meldung zu reservierenden Ressourcen und die dafür erforderliche Reservierungszeitspanne und vergleicht die bestimmten (Meldungs-)Werte mit aktuellen Werten und maximalen Werten der zur Verfügung stehenden Ressourcen und Reservierungszeitspannen im Übertragungsmedium. Anschließend werden die bestimmten Meldungswerte zu der Meldung hinzugefügt und zusammen mit dieser an die Empfängerstationen gesendet, sofern die Summe aus den aktuellen Werten und den bestimmten Meldungswerten die Maximalwerte nicht übersteigt.

Weiterhin wird die Aufgabe durch eine Vorrichtung gelöst, die eine Einrichtung zum Bestimmen der für die Übertragung einer Meldung zu reservierenden Ressourcen und der dafür erforderlichen Reservierungszeitspanne innerhalb einer Sendestation umfaßt. Die Sendestation, die zu einem späteren Zeitpunkt auch als Empfängerstation dienen kann, umfaßt zudem eine Einrichtung zum Vergleichen der bestimmten Meldungswerte der Ressourcen und der Reservierungszeitspanne mit aktuellen Werten und maximalen Werten der zur Verfügung stehenden Ressourcen und Reservierungszeitspannen im Übertragungsmedium innerhalb der Sendestation und eine Einrichtung zum Hinzufügen der bestimmten Meldungswerte zu der zu übertragenden Meldung. Desweiteren umfaßt die Vorrichtung eine Einrichtung zum Senden der Meldung an Empfängerstationen, sobald die Summe aus den aktuellen Werten und den bestimmten Meldungswerten die maximalen Werte nicht übersteigt.

Ein wesentlicher Punkt der Erfindung liegt darin, daß die Sendestation einer zu sendenden Meldung zusätzlich die Informationen hinsichtlich der zu reservierenden Ressourcenmenge und der Reservierungszeitdauer einfügt. Diese Informationen können von allen Stationen empfangen und ausgewertet werden, wodurch jede Station individuell die momentane Auslastung des Mediums bestimmen kann. Abhängig von der Bestimmung der momentanen Auslastung kann sodann die Empfängerstation selbst als Sendestation agieren, sofern unter Berücksichtigung der zu sendenden Meldung und der aktuellen Auslastung des Übertragungsmediums eine Überlastung des Übertragungsmediums nicht stattfindet.

Demzufolge beginnt jede Station nur dann zu senden, wenn die momentane Auslastung der Mediums so gering ist, daß der zusätzlich zu erzeugende Meldungsverkehr das vorher festgelegte Maß, also den maximalen Wert der zur Verfügung stehenden Ressourcenmenge nicht überschreitet. Daraus ergibt sich, daß auch in einer Ethernet-Bus-Topologie "weiche" Realzeitbedingungen ermöglicht werden. Dies wirkt sich wiederum vorteilhaft auf beispielsweise die Sprachqualität von IP-Telefonaten in einem derartigen lokalen Netz aufgrund der mangelnden Verzögerung aus.

Vorteilhaft besitzt jede Station eine dynamische Tabelle, in der sie alle wichtigen Informationen zur Durchführung der Verfahrensschritte gemäß Anspruch 1 ablegt. Jede Tabelle ist derart aufgebaut, daß sie eine empfangene Meldung einer Zeile mit der in der Meldung enthaltenen Kennung des Senders zuordnet, anschließend die zu reservierende Ressourcenmenge als aktuellen Wert der Ressourcenmenge berechnet und nach einer vorbestimmten Zeiteinheit in allen Zeilen der Tabelle den Wert der Zeitspanne erniedrigt. Die Zeilen mit dem Zeitspannenwert Null werden gelöscht. Dadurch ergibt sich ein gewisser Alterungsmechanismus der Tabelle, welche als Algorithmus dargestellt werden kann, der unempfindlich gegenüber dem Ausfall von einzelnen Stationen ist. Die Ressourcenmengen werden nämlich wieder automatisch frei, auch ohne eine explizite Freigabe.

Durch die Anordnung einer Tabelle in jeder Station wird vorteilhaft die Verwaltung der Ressourcen dezentral geregelt, wodurch es keinen Totalausfall des gesamten lokalen Netzes aufgrund des Ausfalls einer zentralen Ressourcenverwaltungsstation geben kann. Durch den Wegfall einer derartigen Ressourcenverwaltungsstation wird auch der Zeit- und Kostenaufwand für die Verwaltung der Ressourcen und damit für die Steuerung der Auslastung des lokalen Netzes minimiert.

Die Anwendung des erfindungsgemäßen Verfahrens ist auf jede Netzart, in der "weiche" Realzeitbedingungen herrschen sollen, wie ein Ethernet oder ein Funknetz, anwendbar.

Das gemeinsame Übertragungsmedium stellt eine endliche Menge von Ressourcen zur Verfügung, die bei dem erfindungsgemäßen Verfahren und der Vorrichtung zur Durchführung des Verfahrens als maximale Werte der Ressourcenmenge berücksichtigt werden können. Derartige Ressourcen können zum Beispiel die Übertragungskapazität des lokalen Netzes, dessen Bandbreite, die zulässige Anzahl von Meldungen pro Zeiteinheit und/oder die zulässige Anzahl von Informationen pro Zeiteinheit darstellen. Die Erfindung berücksichtigt also nicht nur, falls erforderlich, eine dieser Ressourcen bei der Steuerung der Auslastung von lokalen Netzen.

Die Erfindung ermöglicht vorteilhafterweise, daß jede Station einen bestimmten Anteil an den Ressourcen des Übertragungsmediums für eine bestimmte Zeitspanne reservieren kann, ohne daß dieser Anteil von anderen Stationen benutzt werden kann. Bedingt durch eine derartige Reservierung, kann eine optimale Auslastung des Übertragungsmediums ohne Überschreiten der maximal zulässigen Werte für die Ressourcenmenge gewährleistet werden.

Weitere Ausführungsformen, Vorteile und Zweckmäßigkeiten der Erfindung ergeben sich aus den Unteransprüchen.

Nachfolgend wird die Erfindung anhand eines Ausführungsbeispiels beschrieben, das anhand der Abbildungen erläutert wird. Hierbei zeigen:

Fig. 1 die Anordnung eines lokalen Netzes mit einer Mehrzahl von Stationen und

Fig. 2 ein Ablaufdiagramm einer Ausführungsform der Erfindung.

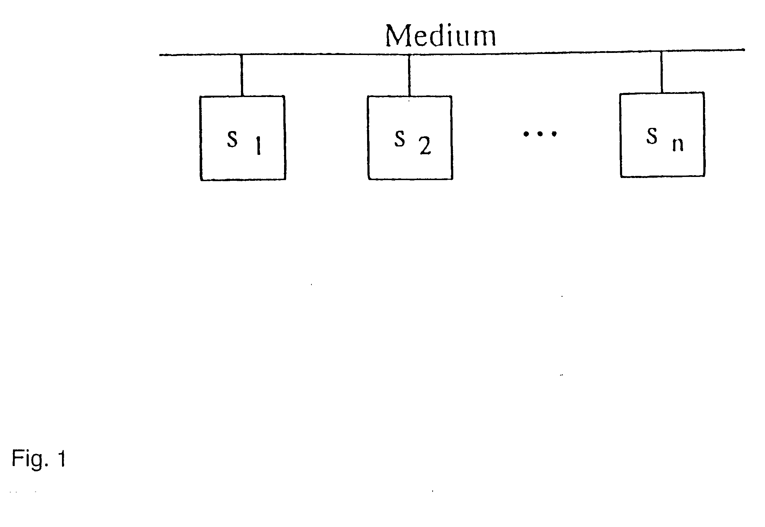

Fig. 1 zeigt ein lokales Netz, wie beispielsweise ein Ethernet, welches als gemeinsames Übertragungsmedium zur Verbindung einer Mehrzahl von Stationen dient. Stationen $S_1$, $S_2$ ... $S_n$ kommunizieren also über ein gemeinsames Übertragungsmedium. Dieses Übertragungsmedium beinhaltet eine endliche Menge von Ressourcen, wie beispielsweise die Übertragungskapazität, die Bandbreite, die zulässige Anzahl an Meldungen pro Zeit und die zulässige Anzahl an Informationen pro Zeit, die aufgrund ihrer natürlichen Begrenzung nicht überschritten werden kann.

Jede Station weist eine eindeutige Kennung Identifikation i auf, die sie von allen anderen Stationen unterscheidbar macht.

Eine Meldung, die über das gemeinsame Übertragungsmedium von einer Station gesendet wird, kann von allen anderen Stationen empfangen werden. Sie enthält die Kennung der Sendestation, wodurch an jeder Empfangsstation festgestellt werden kann, woher die Meldung kommt.

Wird nun von einer Sendestation in eine zu sendende Meldung zusätzlich die Information der zu reservierenden Ressourcenmenge r, welche beispielsweise einem Anteil an der Übertragungskapazität des Übertragungsmediums entspricht, und der dafür erforderlichen Reservierungszeitspanne t hinzugefügt, so kann diese Information in Form von Meldungswerten von allen Empfängerstationen empfangen und ausgewertet werden. Damit kann jede Empfängerstation individuell die momentane/aktuelle Auslastung des Übertragungsmediums bestimmen. Abhängig von dieser Bestimmung wird dann, sofern eine derartige Empfängerstation ebenso eine Meldung senden möchte, diese nur dann gesendet, wenn die aktuelle Auslastung des Mediums so gering ist, daß der zusätzlich erzeugte Meldungsverkehr das vorher festgelegte Maximalmaß $r_{max}$ nicht überschreitet.

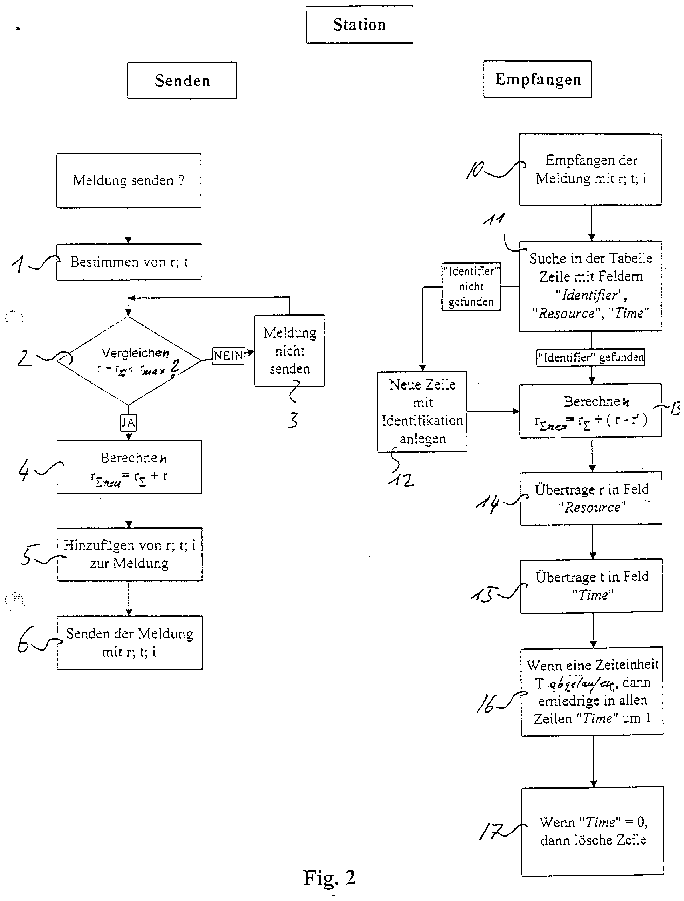

Fig. 2 zeigt ein Ablaufdiagramm einer Ausführungsform der Erfindung, in dem eine Station einmal im Sende- und einmal im Empfangsmodus dargestellt wird. Es sollen folgende Bedingungen gelten:

- S:={$s_1$, $s_2$, ... $s_n$} ist die Anzahl aller Stationen,
- alle Stationen verwenden das gleiche endliche Ressourcen-Modell der Art R= {$r_1$, ... $r_n$}, wobei die $r_i$ alle gleichwertig sind,
- r(s) bezeichnet die Ressourcenmenge, die von der Station s bei Versenden einer Meldung reserviert wird,
- $r_{max}$:= |R| ist der maximale Wert der Ressourcenmenge (maximale Auslastung),
- $r_\Sigma$:=$\Sigma_{s \in S}$r(s) ist der aktuelle Wert der Ressourcenmenge des Übertragungsmediums (aktuelle Auslastung des Mediums),
- alle Stationen benutzen die gleiche Zeiteinheit T, die von den Stationen gemessen wird.

Jede Station beinhaltet eine dynamische Tabelle, in der sie alle für die Verfahrensschritte wichtigen Informationen/Daten ablegt. Eine Zeile dieser Tabelle ist wie folgt aufgebaut:

[ *Identifier, Resource, Time*].

*Identifier* ist die Identfikation/Kennung einer Station, Resource stellt die Menge an Ressourcen dar, die diese Station im Moment reserviert hat, und *Time* stellt die Dauer in Zeiteinheiten dar, für die die Ressourcen belegt sind.

Will nun eine sich im Sendemodus befindende Station eine Meldung versenden, so wird in einem ersten Schritt 1 bestimmt, welche zu reservierende Ressourcenmenge r und dafür erforderliche Reservierungszeitspanne t für die Übertragung der Meldung erforderlich ist. In einem zweiten Schritt 2 wird verglichen, ob die Summe aus dem Wert r der zu reservierenden Ressourcenmenge und dem aktuellen Wert $r_\Sigma$ der Ressourcenmenge in dem Übertragungsmedium kleiner oder gleich dem maximalen zuvor festgelegten Wert $r_{max}$ der Ressourcenmenge des Übertragungsmediums ist.

Falls letzteres zutrifft, wird in einem Schritt 3 die Meldung nicht gesendet, da das Medium ausreichend momentan ausgelastet ist. Über eine Rückschleife wird der Schritt 2 des Vergleiches solange durchgeführt, bis sich ergibt, daß der Maximalwert nicht erreicht wird. In einem Schritt 4 wird der neue aktuelle Wert $r_{\Sigma neu}$ der Ressourcenmenge unter Berücksichtigung des Meldungswertes r berechnet und die Meldung nach Hinzufügen der Meldungswerte r, t und i in einem Schritt 5 anschließend in einem Schritt 6 zusammen mit den Meldungswerten r, t und i gesendet.

Wenn die Station im Empfangsmodus ist, so wird, sobald in einem ersten Schritt 10 eine Meldung mit den Meldungswerten r, t und i empfangen wird, in der oben aufgeführten Tabelle in einem Schritt 11 gesucht die Zeile mit der Identifikation *Identifier* der Sendestation, die die Meldung gesendet hat. Sofern die Zeile nicht gefunden wird, wird in einem Schritt 12 eine neue Zeile mit der Identifikation *Identifier* der Sendestation angelegt.

Jede Tabelle enthält jede Identifikation i höchstens einmal. Wenn $r_i$ der Wert von *Resource* in der Zeile i einer Tabelle der Länge n ist, so gilt:

$$\sum_{i \in \{1, ..., n\}} r_i = r_\Sigma \leq r_{max}$$

Desweiteren gilt, wenn S die Menge aller Stationen und R ein endliches Ressourcenmodell ist, aufgrund des Vorhandenseins jeder der Identifikationen in der Tabelle höchstens einmal und aufgrund der oben angeführten Formel für die Länge n einer Tabelle:

$$n \leq \min\{|S|, |R|\}$$

In einem Schritt 13 wird der neue aktuelle Wert $r_{\Sigma neu}$ der Ressourcenmenge des Übertragungsmediums berechnet. Diese Berechnung schließt den Meldungswert r, den Wert r', wie er im Feld *Resource* gespeichert ist, und den alten aktuellen Wert der Ressourcenmenge $r_\Sigma$ ein. Anschließend wird der Wert r in das Feld *Resource* übertragen und der Reservierungszeitspannenwert t der Meldung wird in das Feld *Time* übertragen (Schritt 14 und 15). Hierdurch werden die Felder *Resource* und *Time* innerhalb der Tabelle einer Station aktualisiert.

Ergänzend ist noch hinzuzufügen, daß, wenn eine Zeiteinheit T abgelaufen ist, in einem Schritt 16 in allen Zeilen der Tabelle der Wert, der in dem Feld *Time* enthalten ist, um 1 reduziert wird. Sobald der Time-Wert den Wert Null erreicht, wird die betreffende Zeile automatisch gelöscht.

Vorteilhafterweise wird eine derartige Tabelle als Hash-Tabelle ausgebildet, die eine effiziente Implementierung ermöglicht.

Bei einer Verknappung der Ressourcenmengen des Übertragungsmediums können bestimmte Stationen derart begünstigt werden, daß diejenigen mit geringerem Ressourcenbedarf gegenüber Stationen mit hohem Ressourcenbedarf bevorzugt werden. Dies entspricht in den meisten Fällen den jeweiligen Anforderungen an ein lokales Netz, denn dadurch sind Notverbindungen mit geringerer Qualität immer noch möglich, auch wenn die volle Bandbreite des Übertragungsmediums nicht mehr zur Verfügung steht.

Es ist auch möglich, den maximalen Wert $r_{max}$ der Ressourcenmenge bei jeder Station unterschiedlich anzusetzen, um so die Stationen unterschiedlich zu priorisieren.

Durch eine derartig dezentrale Verwaltung der Ressourcenmengen mittels einer Tabelle in jeder Station wird ermöglicht, daß nicht nur kein Totalausfall gewährleistet wird, wie es beim Ausfall einer zentralen Ressourcenverwaltungsstation der Fall wäre, sondern daß auch ein Alterungsmechanismus einer jeden Tabelle eine gewisse Unempfindlichkeit gegenüber dem Ausfall einzelner Stationen gewährleistet.

Bei Anwendung der Erfindung auf lokale Netze, wie beispielsweise ein Ethernet, können vorteilhaft "weiche" Echtzeiteigenschaften erreicht werden, wenn die Auslastung des Netzes ein bestimmtes Maß nicht überschreitet und die angeschlossenen Stationen die Meldungen mit konstanter Rate erzeugen. Damit kann ein Quality of Service für die IP-Echtzeitanwendungen bei IP-Telefonaten über ein normales Ethernet realisiert werden.

Eine weitere Anwendung der Erfindung ist in Funknetzen denkbar.

**Bezugszeichenliste**

| | |
|---|---|
| $S_1, S_2 ... S_n$ | Sendestationen/Empfangsstationen |
| r | bestimmte Werte der zu reservierenden Ressourcenmenge |
| t | Reservierungszeitspanne |
| $r_{max}$ | maximaler Wert der Ressourcenmenge |
| $r_\Sigma$ | aktueller Wert der Ressourcenmenge |
| $r_{\Sigma neu}$ | neuer aktueller Wert der Ressourcenmenge |
| 1 | Schritt des Bestimmens von r, t |
| 2 | Schritt des Vergleiches |
| 3 | Schritt des Nichtsendens der Meldung |
| 4 | Schritt des Berechnens von $r_{\Sigma neu}$ |
| 5 | Schritt des Hinzufügens von r, t, i zur Meldung |
| 6 | Schritt des Sendens der Meldung |
| 10 | Schritt des Empfangens der Meldung |
| 11 | Schritt des Suchens in der Tabelle nach Zeile mit Sendestationsidentifikation |
| 12 | Schritt des Neuanlegens einer Zeile |
| 13 | Schritt des Berechnens von $r_{\Sigma neu}$ |
| 14 | Schritt des Übertragens von r in Feld *"Resource"* |
| 15 | Schritt des Übertragens von t in Feld *"Time"* |
| 16 | Schritt des Erniedrigens von *"Time"* |
| 17 | Schritt des Löschens einer Zeile |

**Patentansprüche**

1. Verfahren zur Steuerung der Auslastung eines lokalen Netzes, die eine Mehrzahl von Stationen miteinander verbindet und als gemeinsames Übertragungsmedium mit einer endlichen Menge von Ressourcen zur Übertragung von Meldungen zwischen den Stationen dient, **gekennzeichnet durch** folgende Schritte:

   - Bestimmen (1) der Werte der für die Übertragung einer Meldung zu reservierenden Ressourcenmenge (r) und der dafür erforderlichen Reservierungszeitspanne (t) **durch** eine Sendestation ($S_1$, $S_2$, ... $S_n$),
   - Vergleichen (2) der bestimmten Werte der Ressourcenmenge (r) und der Reservierungszeitspanne (t) mit aktuellen Werten ($r_\Sigma$) und maximalen Werten ($r_{max}$) der zur Verfügung stehenden Ressourcenmenge und Reservierungszeitspanne im Übertragungsmedium **durch** die Sendestation,
   - Hinzufügen (5) der bestimmten Werte der Ressourcenmenge (r) und der Reservierungszeitspanne (t) zu der Meldung, und
   - Senden (6) der Meldung an mindestens eine Empfängerstation ($S_1$, $S_2$ ... $S_n$), sobald die Summe aus den aktuellen und bestimmten Werten (($r_\Sigma$; r) die maximalen Werte ($r_{max}$) nicht übersteigt.

2. Verfahren nach Anspruch 1, **dadurch gekennzeichnet, daß** die Empfängerstationen ($S_1$, $S_2$ ... $S_n$) die Meldung empfangen (10) und die bestimmten Werte der Ressourcenmenge und Reservierungszeitspanne (r) zur Berechnung der aktuellen Werte ($r_\Sigma$) verwenden.

3. Verfahren nach einem der vorangehenden Ansprüche, insbesondere nach Anspruch 1 oder 2, **dadurch gekennzeichnet, daß** die bestimmten, aktuellen und maximalen Werte der Ressourcenmenge und Reservierungszeitspanne (r; $r_\Sigma$; $r_{max}$) in eine dynamische Tabelle (*Resource, Time, Resource*) innerhalb der Stationen abgelegt werden.

4. Verfahren nach einem der vorangegangenen Ansprüche, insbesondere nach Anspruch 3, **dadurch gekennzeichnet, daß** die dynamische Tabelle als eine Hash-Tabelle ausgebildet wird.

**5.** Verfahren nach einem der vorangegangenen Ansprüche,
**dadurch gekennzeichnet, daß**
der Meldung eine Kennung (i) der Sendestation zugeordnet wird, von der sie gesendet wird.

**6.** Verfahren nach einem der vorangegangenen Ansprüche, insbesondere nach einem der Ansprüche 3 bis 5,
**dadurch gekennzeichnet, daß**
die Kennung (i) in jeder Tabelle höchstens einmal enthalten ist.

**7.** Verfahren nach einem der vorangegangenen Ansprüche,
**dadurch gekennzeichnet, daß**
das gemeinsame Übertragungsmedium als Ethernet ausgebildet wird.

**8.** Verfahren nach einem der vorangegangenen Ansprüche, insbesondere nach einem der Ansprüche 1 - 6,
**dadurch gekennzeichnet, daß**
das gemeinsame Übertragungsmedium als Funknetz ausgebildet wird.

**9.** Verfahren nach einem der vorangegangenen Ansprüche,
**dadurch gekennzeichnet, daß**
die Ressourcen Übertragungskapazität, Bandbreite, Meldungen pro Zeit, Informationen pro Zeit und/oder der gleichen Ressourcen zusammensetzen.

**10.** Vorrichtung zur Durchführung des Verfahrens nach einem der Ansprüche 1 - 9,
**gekennzeichnet durch**

- eine Einrichtung zum Bestimmen der für die Übertragung einer Meldung zu reservierenden Ressourcenmenge (r) und der dafür erforderlichen Reservierungszeitspanne (t) innerhalb einer Sendestation ($S_1$, $S_2$ ... $S_n$),
- eine Einrichtung zum Vergleichen der bestimmten Werte der Ressourcenmenge (r) und der Reservierungszeitspanne (t) mit aktuellen Werten ($r_\Sigma$) und maximalen Werten ($r_{max}$) der zur Verfügung stehenden Ressourcenmenge und Reservierungszeitspannen im Übertragungsmedium innerhalb der Sendestation,
- eine Einrichtung zum Hinzufügen der bestimmten Werte der Ressourcenmenge (r) und der Reservierungszeitspanne (t) zu der Meldung und
- eine Einrichtung zum Senden der Meldung von der Sendestation ($S_1$, $S_2$ ... $S_n$) an mindestens eine Empfängerstation ($S_1$, $S_2$ ... $S_n$), sobald

die Summe aus den aktuellen und bestimmten Werten ($r_\Sigma$; r) die maximalen Werte ($r_{max}$) nicht übersteigt.

Fig. 1

Station

Senden                           Empfangen

Meldung senden ?

1 — Bestimmen von r; t

2 — Vergleichen
r + r$_\Sigma \leq$ r$_{MAX}$ ?      NEIN      Meldung
                                 nicht
                                 senden
                                   3

JA

4 — Berechne
r$_{\Sigma neu}$ = r$_\Sigma$ + r

5 — Hinzufügen von r; t; i
zur Meldung

6 — Senden der Meldung
mit r; t; i

10 — Empfangen der
Meldung mit r; t; i

11 — Suche in der Tabelle
Zeile mit Feldern
"Identifier",
"Resource", "Time"

"Identifier"
nicht
gefunden

"Identifier" gefunden

12 — Neue Zeile
mit
Identifikation
anlegen

13 — Berechne
r$_{\Sigma neu}$ = r$_\Sigma$ + ( r - r' )

14 — Übertrage r in Feld
"Resource"

15 — Übertrage t in Feld
"Time"

16 — Wenn eine Zeiteinheit
T abgelaufen, dann
erniedrige in allen
Zeilen "Time" um 1

17 — Wenn "Time" = 0,
dann lösche Zeile

Fig. 2